# EUROPEAN PATENT SPECIFICATION

(11) **EP 1 713 297 B1**
(45) Date of publication and mention of the grant of the patent: **02.10.2013**
(21) Application number: 06112614.0
(22) Date of filing: 13.04.2006
(51) Int. Cl.: H04R 1/28, B60R 11/02

(54) **Speaker device**
Lautsprechervorrichtung
Dispositif haut-parleur

(30) Priority: 15.04.2005 JP 2005118282
(43) Date of publication of application: 18.10.2006
(73) Proprietor: Pioneer Corporation, Kanagawa 212-0031 (JP); Tohoku Pioneer Corporation, Tendo-shi, Yamagata-ken (JP)
(72) Inventor: Onuma, Tetsuya, Oaza Kunomoto, Tendo-shi, Yamagata (JP); Takeda, Hiroki, Oaza Kunomoto, Tendo-shi, Yamagata (JP); Ito, Kimihiko Ito, Oaza Kunomoto, Tendo-shi, Yamagata (JP)
(74) Representative: Haley, Stephen

(56) References cited:
- EP-A- 1 130 943
- EP-A1- 0 653 331
- WO-A-2004/056612

## Description

The present invention relates to a configuration of a housing in a speaker device.

Conventionally, a speaker for a vehicle is mounted onto various kinds of places such as an inner panel of a vehicle, a rear tray, a luggage compartment and a trunk room.

A speaker for a vehicle, disclosed in Japanese Patent Application Laid-open under No. 7-13758, is mounted onto a recesssd portion of a spare tire in a trunk room of a vehicle, for example. Thereby, the inside of the trunk room can be effectively used.

In addition, a speaker for a vehicle, disclosed in Japanese Patent Application Laid-open under No. 4-5141, includes a speaker unit, a spirally-wound duct integrated with the speaker unit, a central duct communicating with the spirally-wound duct and extending to a front of the vehicle, and a sound output part communicating with the front of the central duct and having a sound output portion directed to a vehicle interior. The speaker for the vehicle is mounted onto a spare tire housing space of a trunk room of the vehicle. By the configuration, the sound outputted from the front surface of the speaker unit is transmitted to the spirally-wound duct and the central duct to be outputted from the sound output part into the vehicle. As a result, it becomes possible to obtain sufficient low-frequency sound reproduction without losing the vehicle space.

Additionally, a speaker system for a vehicle, disclosed in Japanese Patent Application Laid-open under No. 9-175282, includes a speaker unit and a speaker box housing it. The speaker box is provided in such a state that the speaker box contacts a portion including a tire house upper portion and a luggage compartment floor surface behind a rear seat of the vehicle. Thereby, the use of the luggage compartment is improved. Furthermore, an acoustic device for a vehicle, disclosed in Japanese Patent Application Laid-open under No. 4-15391, is provided in a spare tire housing space of a vehicle. The acoustic device for the vehicle and a vehicle interior communicate with each other by a sound output duct.

EP-A-1130943 discloses a speaker device with speaker unit and housing. The present invention has been achieved in order to solve the above problem. It is an object of this invention to provide a speaker device, provided in a tire house of a spare tire, including a housing capable of preventing deterioration of sound quality. According to the present invention, there is provided a speaker device to be mounted in a tire housing of a vehicle such that in use it is opposite to a spare tire mounted in the tire housing, the device comprising:
a speaker unit; and
a housing which houses the speaker unit and includes a sound output passage part introducing a sound output from the speaker unit into a vehicle interior;
wherein the sound output passage part is formed between a side portion of the spare tire and a portion of the housing in use, and
characterised in that said portion of the housing is formed into substantially the same curved shape as that of said side portion of the spare tire.

The above speaker device includes the speaker unit serving as an output source of the sound, and the housing which houses the speaker unit and has the sound output shape part introducing the sound outputted from the speaker unit into the vehicle interior. The sound output shape part forms, between the spare tire and itself, the predetermined space functioning as the passage introducing the sound outputted from the speaker unit into the vehicle interior, when the housing is provided at the position opposite to the spare tire provided in the vehicle.

The portion of the sound output shape part, arranged at the position corresponding to the side of the spare tire, is formed into the curved shape with respect to the output direction of the sound. The portion of the sound output shape part is formed into a substantially same curved shape as that of the side of the spare tire.

Thereby, the size of the space formed between the portion of the sound output shape part and the side of the spare tire substantially becomes same at each position from the position corresponding to the inner circumferential side of the spare tire to the position corresponding to the outer circumferential side thereof. Thus, the size of the cross-sectional area in the circumferential direction, formed between the portion of the sound output shape part and the side of the spare tire, substantially becomes same at each position from the position corresponding to the inner circumferential side of the spare tire to the position corresponding to the outer circumferential side thereof.

Hence, the sound outputted from the speaker unit can smoothly pass through the space formed between the portion of the sound output shape part and the side of the spare tire. Thereby, the sound passing through the space is smoothly introduced into the vehicle interior. Therefore, the deterioration of the sound quality can be prevented.

In a manner of the above speaker device, the housing may include a first housing which houses the speaker unit and a second housing which is mounted on the first housing, and the speaker unit may include a diaphragm which generates the sound, and the first housing may include an opening which outputs the sound outputted from a rear side of the diaphragm into the space.

In accordance with this manner, the housing includes the first housing which houses the speaker unit and the second housing which is mounted on the first housing. In addition, the speaker unit includes the diaphragm which generates the sound. Particularly, the first housing includes the opening (bass reflex port) outputting the sound outputted from the rear side of the diaphragm into the above space. Thereby, the speaker device can be a speaker device in a phase inverter system (bass reflex system), capable of outputting the sound not only from the front side of the diaphragm but also from the rear side thereof.

In a preferred example, the second housing may include a first part which is formed into a substantial cup shape and houses the speaker unit, a second part which is formed into a substantially annular plan shape and outwardly extends from an outer peripheral end portion of the first part, and a third part which outwardly extends from an outer peripheral end portion of the second part, and the portion of the sound output shape part may correspond to the second part.

The nature, utility, and further features of this invention will be more clearly apparent from the following detailed description with respect to preferred embodiment of the invention when read in conjunction with the accompanying drawings briefly described below.
FIG. 1 is a plan view schematically showing such a state that a speaker device according to an embodiment of the present invention is mounted on a predetermined position in a luggage compartment of a wagon-type vehicle;
FIG. 2 is a perspective view of the speaker device of this embodiment when observed from a front side;
FIG. 3 is a perspective view of the speaker device of this embodiment when observed from a rear side;
FIG. 4 shows a partly cross-sectional perspective view of the speaker device corresponding to FIG. 2, in which a part of the speaker device is cut off;
FIG. 5 is an one-side cross-sectional view of a speaker unit of this embodiment when cut along a plane having a central axis thereof;
FIG. 6 shows a perspective view showing an inner configuration of the speaker device of this embodiment;
FIG. 7 is a cross-sectional view of the speaker device when cut along a cutting line A-A' shown in FIG. 1;
FIG. 8 is a cross-sectional view of a speaker device according to a comparative example, corresponding to a broken-line area E1 shown in FIG. 7; and
FIG. 9 is a plan view schematically showing such a state that the speaker device according to this embodiment is mounted on a predetermined position in a trunk room of a sedan-type vehicle.

The preferred embodiments of the present invention will now be described below with reference to the attached drawings.

### [Configuration of Speaker Device]

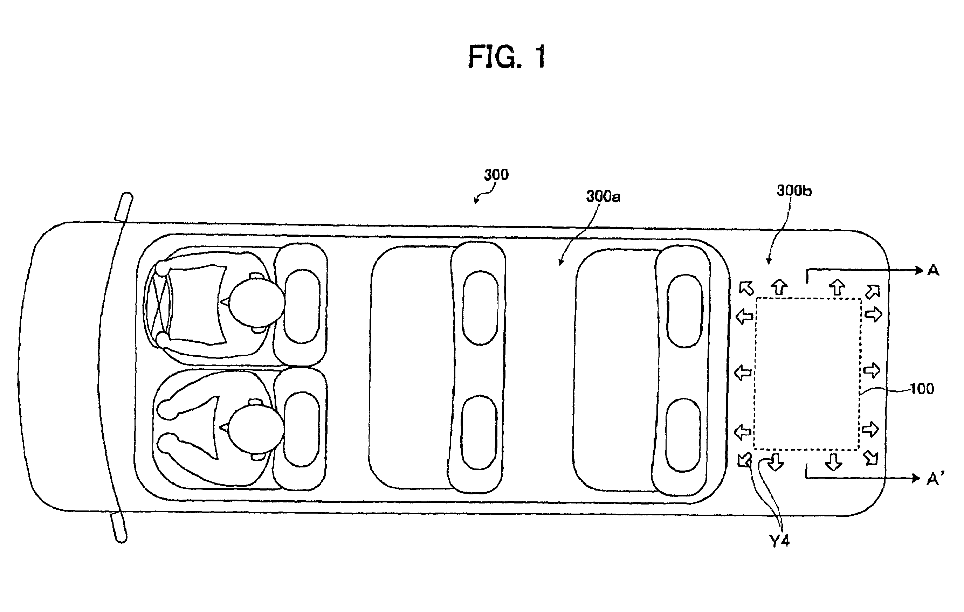

A speaker device 100 according to an embodiment of the present invention is the speaker device in the phase inverter system (bass reflex system) outputting an acoustic wave from both a front side and a rear side of the diaphragm. At the same time, the speaker device 100 is the speaker device of a sub woofer type. The speaker device 100 can be preferably used as a speaker device for a vehicle. As shown in FIG. 1, when the speaker device 100 is applied to a wagon-type vehicle 300, for example, the speaker device 100 is mounted on a predetermined position in a luggage compartment 300b arranged behind a rear seat. In the wagon-type vehicle 300, a space corresponding to the luggage compartment 300b and a space including a seat for a passenger communicate with each other. Therefore, these two spaces are called "vehicle interior 300a" together, hereinafter.

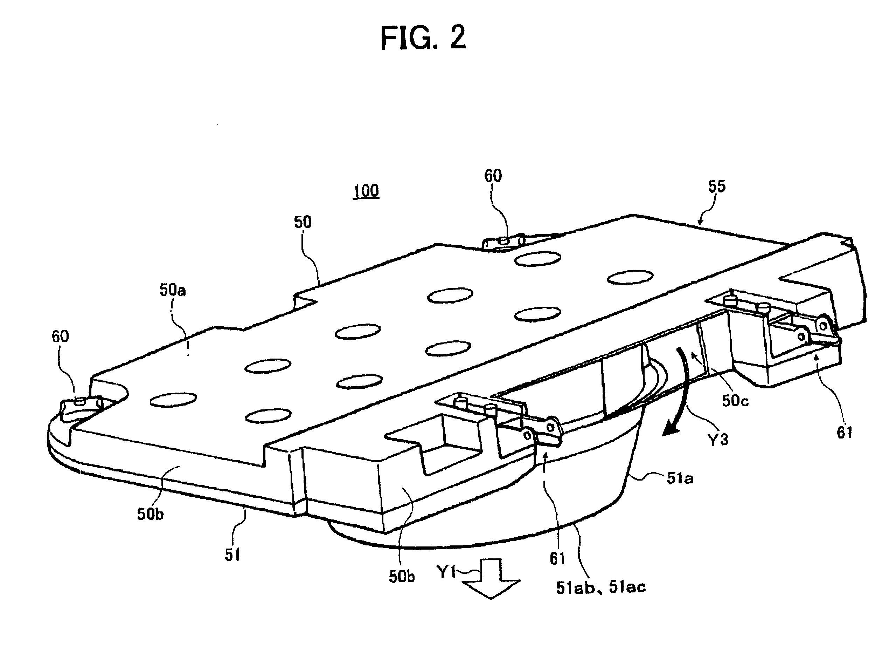

First, a description will be given of a configuration of the speaker device 100 according to the present invention with reference to FIG. 2 to FIG. 7.

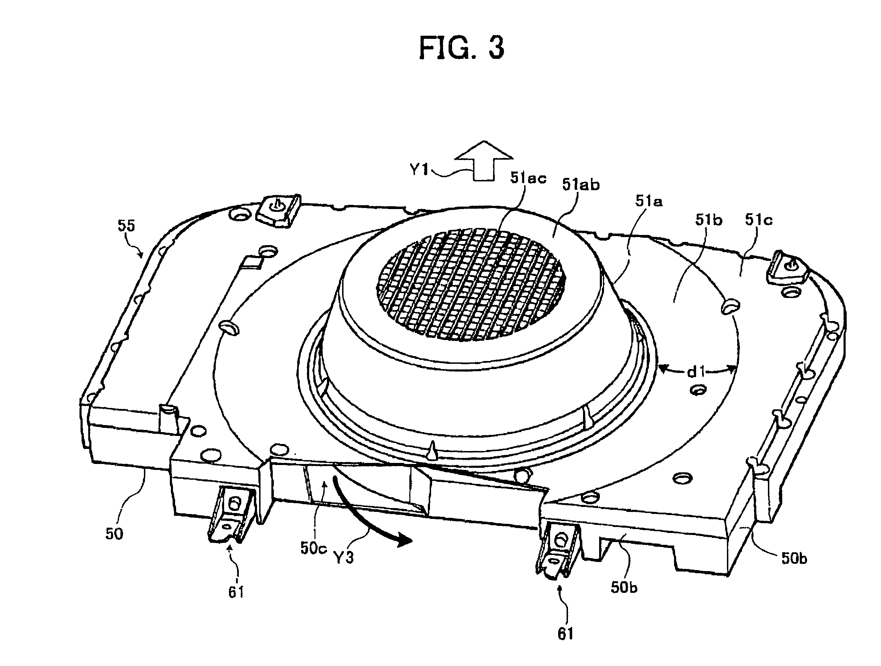

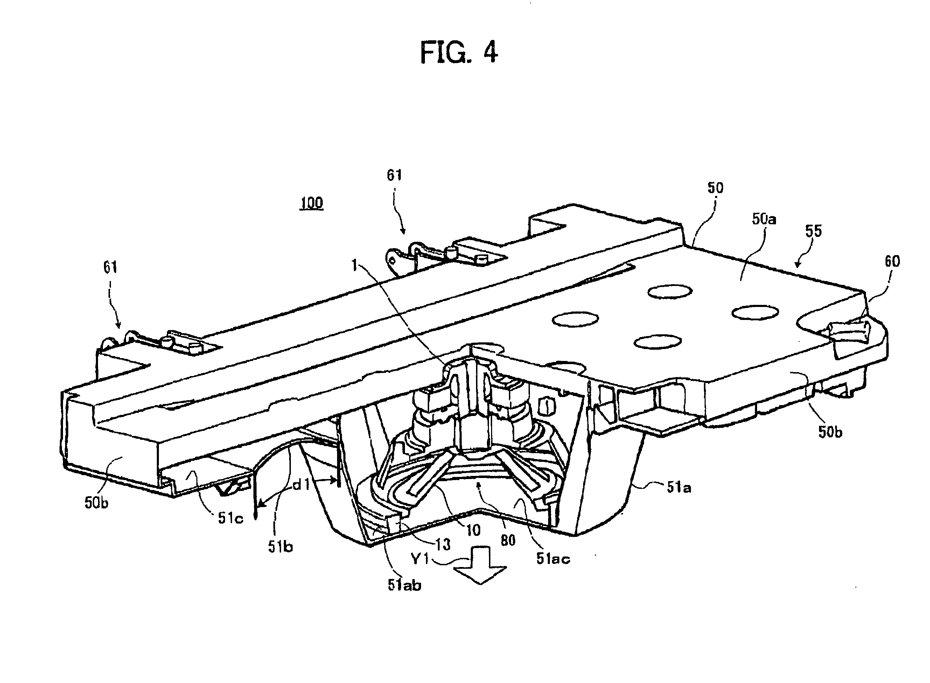

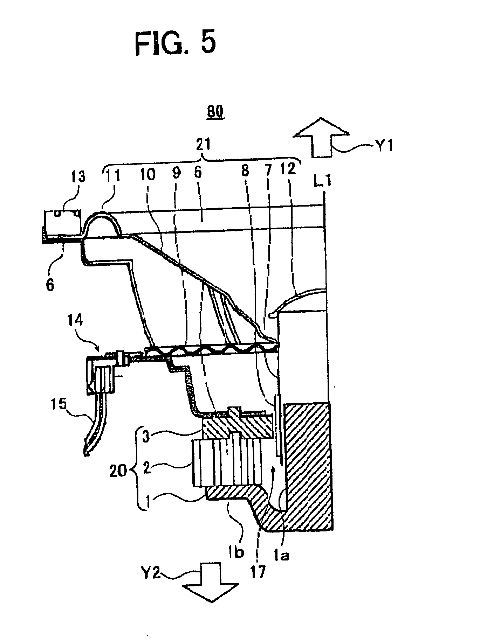

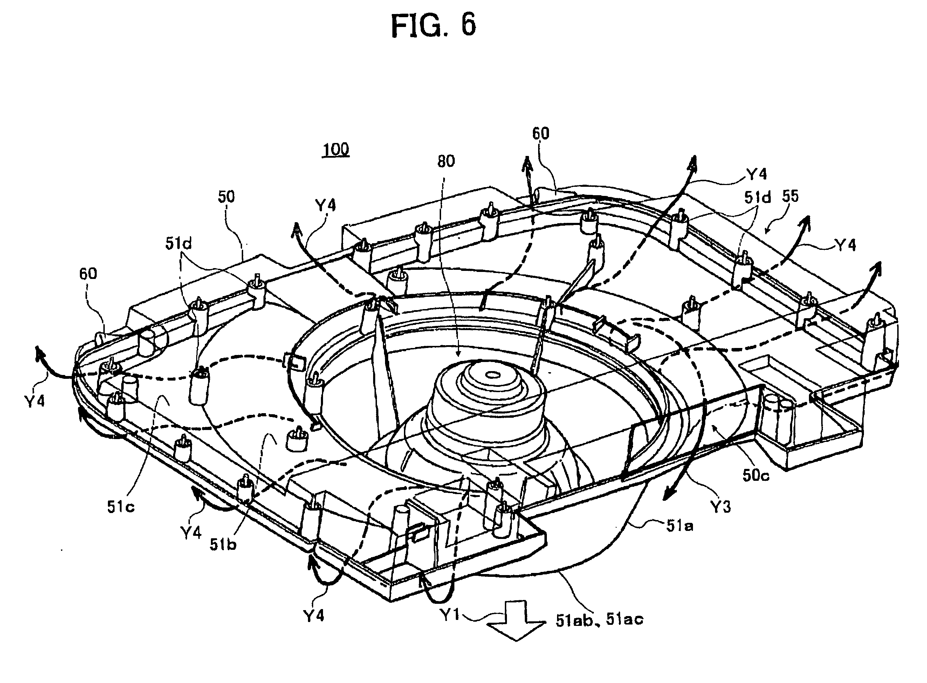

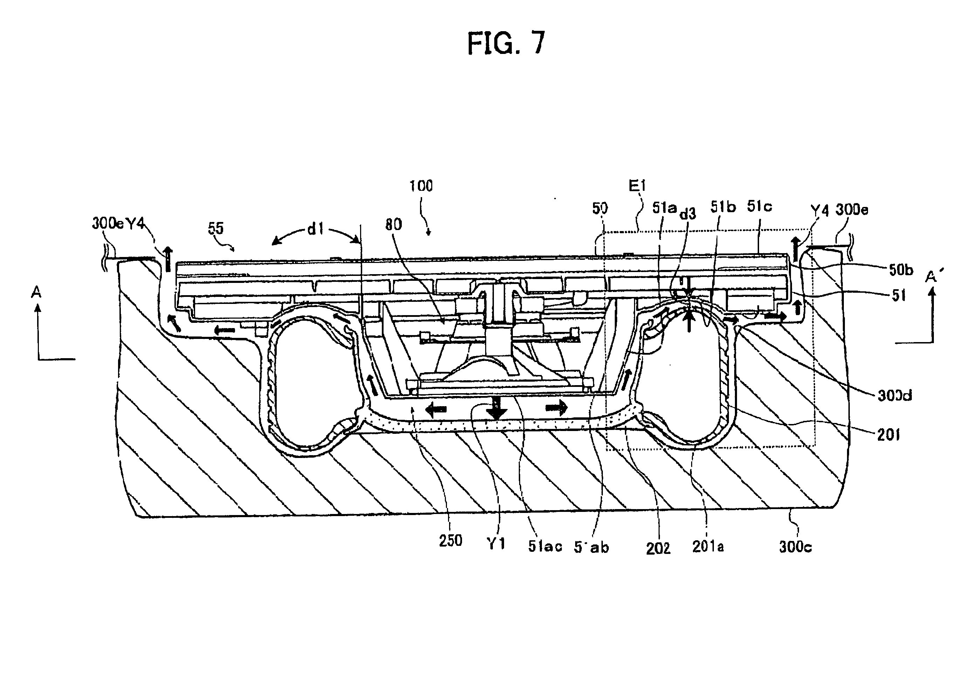

FIG. 2 shows a perspective view of the speaker device 100 when observed from the front side. FIG. 3 shows a perspective view of the speaker device 100 when observed from the rear side. FIG. 4 is a perspective view corresponding to FIG. 2 and a partly cross-sectional view of the speaker device 100 in which a part thereof is cut off. FIG. 5 is a one-side cross-sectional view of a speaker unit 80, being a component of the speaker device 100 and an output source of the sound, when cut by a plane including a central axis L1 thereof. FIG. 6 is a perspective view of the speaker device 100 when observed from the front side, and it is also a perspective view showing an inner configuration of the speaker device 100. FIG. 7 is a cross-sectional view along a cutting-line A-A' shown in FIG. 1, which shows such a state that the speaker device 100 is mounted on the predetermined position in the luggage compartment 300b.

The speaker device 100 includes the speaker unit 80 and a speaker box 55 serving as a housing, which houses the speaker unit 80.

First, a description will be given of a configuration of the speaker box 55.

The speaker box 55 includes a first housing 50 and a second housing 51.

The first housing 50 is mounted on the second housing 51 and has a function of an upper cover for covering the inner portion of the second housing 51. The first housing 50 has one upper wall 50a and plural side walls 50b integrated with the upper wall 50a, and it is formed into a substantial box shape. At positions on the inner side of the upper wall 50a and corresponding to plural mounting portions 51d (see FIG. 6) provided on the inner side of the second housing 51 which will be explained later, plural mounting portions (not shown) are provided. On the one side wall 50b of the plural side walls 50b, a bass reflex port 50c serving as an opening is formed. The bass reflex port 50c has a function of outputting the acoustic wave outputted from the rear side of a diaphragm 10 being the component of the speaker unit 80 in the outward direction of an arrow Y3, as will be explained later. In addition, when the side wall 50b on which the bass reflex port 50c is formed is observed from the front side, hinges 61 are provided at both left and right positions of the bass reflex port 50c, respectively. Moreover, on the upper wall 50a and in the vicinity of positions of corners of the side wall 50b opposite to the side wall 50b on which the plural hinges 61 are provided, plural fixing screws 60 are provided. As shown in FIG. 7, the fixing screws 60 and the hinges 61 have functions of fixing the speaker device 100 to a tire house 300c in the luggage compartment 300b of the wagon-type vehicle 300 in such a state that the speaker device 100 is opposite to a spare tire 201 with a constant space 250.

The second housing 51 has a first part 51a formed into a substantial cup shape, a second part 51b outwardly extending from an outer peripheral end of the first part 51a, and a third part 51c outwardly extending from an outer peripheral end of the second part 51b. Hereinafter, a total part of the first part 51a, the second part 51b and the third part 51c is generically called "sound output shape part".

The first part 51a has a function of housing and supporting the speaker unit 80. A bottom portion 51ab of the first part 51a has flatness, and a grille 51ac formed into a mesh or grating state is formed thereon. The grille 51ac has a function of making the acoustic wave, outputted from the front side of the diaphragm 10 (see FIG. 5) being the component of the speaker unit 80, pass through in the direction of an arrow Y1 on the outer side of the first part 51a. As shown in FIG. 7, the second part 51b which characterizes the present invention has a curved shape with respect to the output direction (traveling direction) of the acoustic wave outputted from the speaker unit 80. In addition, the second part 51b is formed into a substantial annular shape when planarly observed. Further, as shown in FIG. 7, the second part 51b is formed into the substantially same curved shape as a shape of a side portion 201a of the spare tire 201. Therefore, as shown in FIG. 7, a length (width) d1 along the curved surface of the second part 51b in the radial direction of the spare tire 201 is set to the substantially same value as a length along the curved surface of the side portion 201a of the spare tire 201 in the radial direction of the spare tire 201. The third part 51c has flatness, and an outer shape thereof is formed into a substantially rectangle shape. In addition, on the inner side of the second housing 51 and at appropriate positions on the first part 51a, the second part 51b and the thirdpart 51c, the plural mounting portions 51d are provided, respectively. The respective mounting portions 51d have functions to engage with plural mounting portions (not shown) provided on the inner side of the above-mentioned first housing 50 to fit the first housing 50 to the second housing 51.

Next, a description will be given of the configuration of the speaker unit 80.

The speaker unit 80 includes a magnetic circuit 20, a vibration system 21 and other components, as shown in FIG. 5.

The magnetic circuit 20 has a yoke 1, a magnet 2 and a plate 3, and is formed as an outer magnet type magnetic circuit. The yoke 1 has a cylindrical pole portion 1a and a flange portion 1b outwardly extending from a lower end portion of the outer peripheral wall of the pole portion 1a. The magnet 2 is formed into an annular shape and mounted onto the flange portion 1b. The plate 3 is formed into a substantially annular shape and mounted onto the magnet 2. A gap (magnetic gap) 17 is formed between the outer peripheral wall of the pole portion 1a being the component of the yoke 1 and the inner peripheral wall of the plate 3.

The vibration system 21 includes a frame 6, a voice coil bobbin 7, a voice coil 8, a damper 9, the diaphragm 10, an edge 11 and a cap 12.

The frame 6 is formed into a substantial cup shape and has a function of supporting various kinds of components forming the speaker unit 80.

The voice coil bobbin 7 is formed into a substantially cylindrical shape and provided at a position covering the vicinity of the upper end portion of the pole portion 1a being the component of the yoke 1.

The voice coil 8 is wound around the vicinity of the lower end portion of the outer peripheral wall of the voice coil bobbin 7 and has two wirings, which includes plus lead wires and minus lead wires (not shown). Each of the plus lead wires is an input wiring for an L (or R)-channel signal, and each of the minus lead wires is an input wiring for a ground (GND:ground) signal. The two plus lead wires and the two minus lead wires are connected to each of terminals 14 provided on the frame 1. In FIG. 5, only the one terminal 14 is shown. The other terminal 14 is also provided on the frame 1 near the one terminal 14. In addition, one end of each wiring 15 is connected to each of the terminals 14 via a connecter, and a wiring on an output side of an amplifier (not shown) is connected to other end of each wiring 15 via the connecter. Thereby, the signal and the power of two channels are inputted to the voice coil 8 from the amplifier side via each of the wirings 15, each of the terminals 14, the two plus lead wires and the two minus lead wires.

The damper 9 is formed into an annular shape and has plural waveforms (corrugations) concentrically formed. The inner peripheral edge portion of the damper 9 is mounted onto the vicinity of the upper end portion of the outer peripheral wall of the voice coil bobbin 7. Meanwhile, the outer peripheral edge portion of the damper 9 is mounted onto the position corresponding to the substantially middle portion of the frame 1.

The diaphragm 10 is formed into a cone shape. The inner peripheral edge portion of the diaphragm 10 is mounted onto the upper end portion of the outer peripheral wall of the voice coil bobbin 7.

The edge 11 is formed into an annular shape. The inner peripheral edge portion of the edge 11 is mounted on the outer peripheral edge portion of the diaphragm 10, and the outer peripheral edge portion of the edge 11 is mounted on the upper end portion of the frame 1.

The cap 12 is formed into a dome shape and provided at a position covering the upper end portion of the voice coil bobbin 7. The cap 12 has a function of preventing dust and water from entering the inner portion of the speaker unit 80.

Other component is a buffer member 13, other than the above-mentioned terminals 14 and the wirings 15. The buffer member 13 is originally formed into a pole shape, and it is mounted onto the upper surface of the outer peripheral edge portion of the edge 11 in a state of being deformed into a circle shape. As the buffer member 13, a member having elasticity, such as sponge and urethane, is preferred, for example.

In the speaker unit 80 having such a configuration, the signal and power outputted from the amplifier is inputted to the voice coil 8 via each wiring 15, each terminal 14, the two plus lead wires and the two minus lead wires. Thereby, the driving force is generated to the voice coil 8 in the magnetic gap 17, which vibrates the diaphragm 10 in the direction of the central axis L1 of the speaker unit 80. In this manner, the speaker unit 80 outputs the acoustic wave in both of the direction of the arrow Y1 on the front side of the diaphragm 10 and the direction of the arrow Y2 of the rear side of the diaphragm 10, respectively.

The above-mentioned speaker unit 80 is housed into the speaker box 55 including the first housing 50 and the second housing 51. Thereby, the speaker device 100 is formed.

Concretely, as particularly shown in FIG. 4, the speaker unit 80 is housed into the first part 51a to be fixed thereto so that the buffer member 13 being the component of the speaker unit 80 and the bottom portion 51ab of the first part 51a of the second housing 51 contact with each other and the yoke 1 being the component of the speaker unit 80 and the upper wall 50a of the first housing 50 contact with each other. Therefore, the front side of the diaphragm 10 being the component of the speaker unit 80 is arranged on the side opposite to the grille 51ab of the second housing 51. In addition, as shown in FIG. 6, the first housing 50 is mounted onto the second housing 51 in such a state that plural mounting portions (not shown) being the component of the first housing 50 and the plural mounting portions 51d being the components of the second housing 51 engage with each other. In this manner, the speaker device 100 is formed.

In such a speaker device 100, if the speaker unit 80 is driven, the acoustic wave outputted from the front side of the diaphragm 10 is outputted in the direction of the arrow Y1 via the grille 51ac, and the acoustic wave outputted from the rear side of the diaphragm 10 is outputted in the direction of the arrow Y3 via the space between the first housing 50 and the second housing 51 and the bass reflex port 50c.

### [Method of Mounting Speaker Device on Vehicle]

Next, a description will be given of a method of mounting the speaker device 100 onto the predetermined position in the luggage compartment 300b of the wagon-type vehicle 300, with reference to FIG. 7.

As shown in FIG. 7, a tire house portion 300c as a structure of the wagon-type vehicle 300 is formed on a lower side of a floor surface 300e having a function of mounting luggage in the luggage compartment 300b. The tire house portion 300c includes a space 300d for housing the spare tire 201 including a wheel 202. The spare tire 201 is mounted in the space 300d, and the speaker device 100 is arranged on the upper side of the spare tire 201 and in the space 300d, with the constant space 250. Thereby, the speaker device 100 can be mounted on the wagon-type vehicle 300 without losing the necessary space in the vehicle interior 300a. Additionally, the speaker device 100 is fixed to the tire house portion 300c via the fixing screws 60 and the hinges 61 provided in the first housing 50. When the spare tire 201 is taken out, the fixing screws 60 are unfastened and the speaker device 100 is rotated with the hinges 61 as a center by lifting the side of the fixing screws 60 of the speaker device 100. Then, the spare tire 201 is exposed. Thereby, the spare tire 201 can be taken out of the wagon-type vehicle 300.

In a state shown in FIG. 7, the sound output shape part is opposite to the spare tire 201 with the constant space 250. Concretely, the first part 51a of the second housing 51 is housed into the inner side of the wheel 202 to be opposite to the wheel 202 with the constant space 250. In addition, the second part 51b of the second housing 51 is opposite to the side portion 201a of the spare tire 201 formed into the curved shape with the constant space 250. The third part 51c of the second housing 51, the side wall of the second housing 51 and the side wall 50b of the first housing 50 are opposite to the tire house portion 300c with the constant space 250. Additionally, the space 250 between the first part 51a and the wheel 202, the space 250 between the second part 51b and the side portion 201a of the spare tire 201, the space 250 between the third part 51c and the tire house portion 300c and the space 250 between the side walls of the second housing 51 and the first housing 50 and the tire house portion 300c are mutually communicate with each other. The space 250 functions as an acoustic passage introducing the acoustic wave outputted from the speaker unit 80 into the vehicle interior 300a, as will be explained later.

Namely, as shown in FIG. 5 to FIG. 7, in the speaker device 100, at the time of driving of the speaker unit 80, the acoustic wave outputted from the front side of the diaphragm 10 is outputted in the direction of the arrow Y1 via the grille 51ac of the second housing 51, and the acoustic wave outputted from the rear side of the diaphragm 10 is outputted in the direction of the arrow Y3 via the bass reflex port 50c, respectively.

As shown in FIG. 1, FIG. 6 and FIG. 7, the acoustic wave outputted in the direction of the arrow Y1 travels into the space 250 between the first part 51ab of the second housing 51 and the wheel 202 in the arrow direction shown in the drawing. Then, the acoustic wave travels into the space 250 between the second part 51b of the second housing 51 and the side portion 201a of the spare tire 201 in the arrow direction shown in the drawing, in the space 250 between the third part 51c of the second housing 51 and the tire house portion 300c in the arrow direction shown in the drawing, and in the space 250 between the side wall of the second housing 51 and the side wall 50b of the first housing 50 and the tire house portion 300c in the arrow direction shown in the drawing, in sequence. Further, the acoustic wave is outputted into the vehicle interior 300a in which the passenger exists, as shown in the direction of the arrow Y4. Though the illustration in the drawing is omitted, the acoustic wave outputted in the direction of the arrow Y3 via the bass reflex port 50c also travels into the above-mentioned space 250 to be subsequently outputted into the vehicle interior 300a.

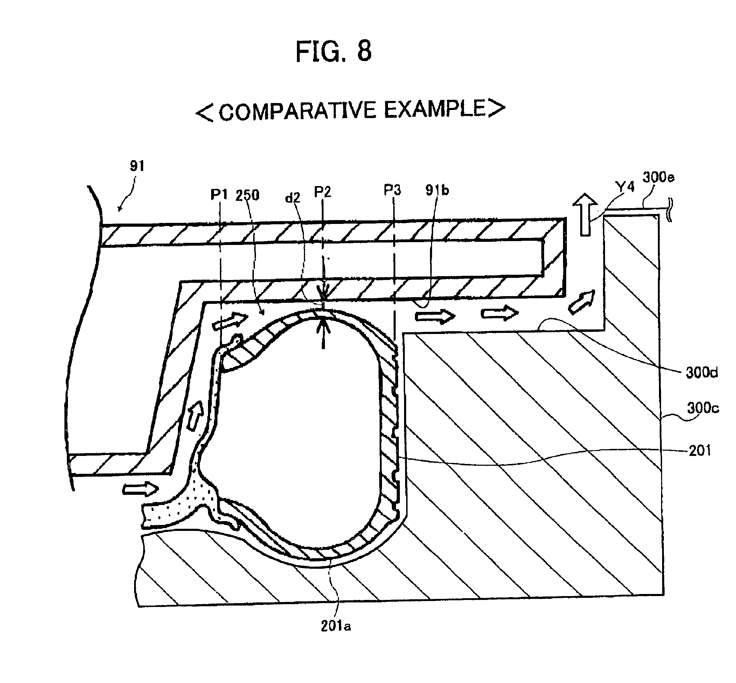

Next, a description will be given of characteristic operation and effect of the speaker device 100 of the present invention in comparison with a comparative example. FIG. 8 is a partly cross-sectional view showing a configuration of the comparative example corresponding to the vicinity of the broken-line area E1 shown in FIG. 7. In the comparative example, the same reference numerals are given to the same components as those of the present invention, and explanations thereof will be omitted or simplified.

When a configuration of a speaker box 91 being a component of a speaker device according to the comparative example and the configuration of the speaker box 55 being the component of the speaker device 100 of the present invention are compared, there is a particular difference, which will be described below.

In the comparative example, a lower portion 91b of the speaker box 91, opposite to the side portion 201a of the spare tire 201, is formed into a liner shape, not into a curved shape, when sectionally observed. Therefore, a size d2 of the space 250 formed between the lower portion 91b of the speaker box 91 in the comparative example and the side portion 201a of the spare tire 201 is different at each position from the inner circumferential side of the spare tire 201 to the outer circumferential side thereof.

Namely, while the size d2 of the space 250 formed between the lower portion 91b and the side portion 201a of the spare tire 201 is large at a position P1 corresponding to the inner circumference of the spare tire 201 and a position P3 corresponding to the outer circumference of the spare tire 201, the size d2 of the space 250 formed between the lower portion 91b and the side portion 201a of the spare tire 201 is small at a position P2 corresponding to the vicinity of the middle portion (corresponding to a top portion when sectionally observed) of the spare tire 201. Therefore, a cross-sectional area in the circumferential direction of the spare tire 201, formed between the lower portion 91b of the speaker box 91 and the side portion 201a of the spare tire 201 at the position P1, and a cross-sectional area in the circumferential direction of the spare time 201, formed between the lower portion 91b of the speaker box 91 and the side portion 201a of the spare tire 201 at the position P3, are large, respectively. Meanwhile, a cross-sectional area in the circumferential direction of the spare tire 201, formed between the lower portion 91b of the speaker box 91 and the side portion 201a of the spare tire 201 at the position P2, is small. In this manner, in the comparative example, the cross-sectional area in the circumferential direction of the spare tire 201, formed between the lower portion 91b of the speaker box 91 and the side portion 201a of the spare tire 201, is largely varied at each of the positions P1 to P3.

Due to the configuration, at the time of the driving of the speaker unit, there occurs a problem which will be explained below, in the comparative example. Namely, the acoustic wave outputted from the speaker unit travels into the space 250 between the lower portion 91b of the speaker box 91 and the wheel 202 in the arrow direction shown in the drawing, and it travels into the space 250 between the lower portion 91b of the speaker box 91 and the side portion 201a of the spare tire 201 in the arrow direction shown in the drawing. Afterward, the acoustic wave travels into the space 250 between the lower portion 91b of the speaker box 91 and the tire house portion 300c in the direction shown in the drawing to be further outputted into the vehicle interior 300a in which the passenger exists, as shown in the direction of the arrow Y4.

However, in the comparative example, as described above, the size of the cross-sectional area in the circumferential direction of the spare tire 201, formed between the lower portion 91b of the speaker box 91 and the side portion 201a of the spare tire 201, i.e., the size of the space 250 serving as the acoustic passage, is largely varied at each of the positions P1 to P3. Hence, it becomes problematic that an unnecessary resonance occurs due to the configuration and the sound quality is deteriorated.

In this point, in the present invention, the second part 51b of the second housing 51, being the component of the sound output shape part, arranged at the position corresponding to the side portion 201a of the spare tire 201, is formed into the curved shape with respect to the output direction (traveling direction) of the acoustic wave. In addition, the shape of the side portion 201a of the spare tire 201 is reflected to the shape of the second part 51b of the second housing 51, and the second part 51b of the second housing 51 is formed into the substantially same curved shape as that of the side portion 201a of the spare tire 201. Thus, as shown in FIG. 7, a size d3 of the space 250, formed between the second part 51b of the second housing 51 and the side portion 201a of the spare tire 201, substantially becomes same at each of the positions from the position corresponding to the inner circumferential side of the spare tire 201 to the position corresponding to the outer circumferential side thereof. Hence, the size of the cross-sectional area in the circumferential direction of the spare tire 201, formed between the second part 51b of the second housing 51 and the side portion 201a of the spare tire 201, substantially becomes same at each of the positions from the position corresponding to the inner circumferential side of the spare tire 201 to the position corresponding to the outer circumferential side thereof.

Hence, according to the present invention, the acoustic wave outputted from the speaker unit 80 can smoothly pass through the space 250 formed between the sound output shape part and the second part 51b of the second housing 51 and the side portion 201a of the spare tire 201. Thereby, the sound passing through the space 250 is smoothly introduced into the vehicle interior 300a. Thus, in the present invention, no unnecessary resonance occurs unlike the comparative example, and the deterioration of the sound quality can be prevented.

### [Modification]

In the above embodiment, the speaker device 100 is applied to the wagon-type vehicle 300. The speaker device 100 is provided into the luggage compartment 300b, and the acoustic wave is directly outputted into the vehicle interior 300a via the speaker device 100.

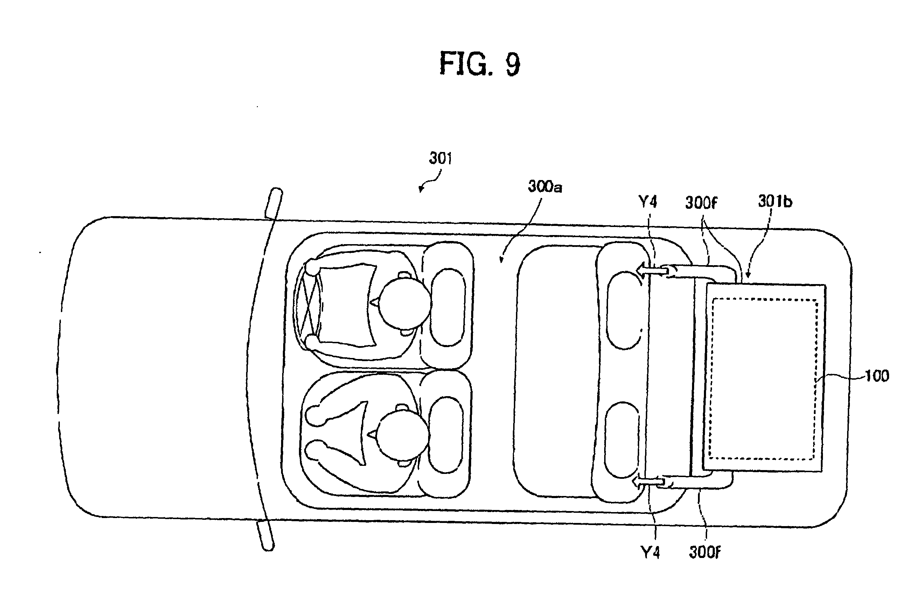

However, the present invention is not limited to this. Namely, in the present invention, as shown in FIG. 9, the speaker device 100 can be also applied to a sedan-type vehicle 301. In this case, the speaker device 100 is provided in a trunk room 301b, and a duct 300f is provided between the speaker device 100 and the vehicle interior 300a. Therefore, the acoustic wave outputted from the speaker device 100 is outputted into the vehicle interior 300a via the duct 300f.

## Claims

1. A speaker device (100) to be mounted in a tire housing of a vehicle such that in use it is opposite to a spare tire (201) mounted in the tire housing, the device comprising:
a speaker unit (80); and
a housing which houses the speaker unit and includes a sound output passage part introducing a sound output from the speaker unit into a vehicle interior (300a);
wherein the sound output passage part is formed between a side portion of the spare tire (201) and a portion of the housing in use, and
**characterised in that** said portion of the housing is formed into substantially the same curved shape as that of said side portion of the spare tire.

2. The speaker device (100) according to claim 1, wherein the housing includes a first housing (50) which houses the speaker unit and a second housing (51) which is mounted on the first housing, and the speaker unit (80) includes a diaphragm (10) which generates the sound;
And wherein the first housing (50) includes an opening which outputs the sound outputted from a rear side of the diaphragm (10) into the space.

3. The speaker device (100) according to claim 2;
wherein the second housing (51) includes a first part (51a) which is formed into a substantial cup shape and houses the speaker unit (80), a second part (51b) which is formed into a substantially annular plan shape and outwardly extends from an outer peripheral end portion of the first part, and a third part (51c) which outwardly extends from an outer peripheral end portion of the second part; and
wherein the portion of the sound output shape part corresponds to the second part (51 b).

## Patentansprüche

1. Lautsprechervorrichtung (100), die in einem Reifengehäuse eines Fahrzeugs zu montieren ist, so dass sie im Gebrauch einem in dem Reifengehäuse montierten Ersatzreifen (201) gegenüber liegt, wobei die Vorrichtung Folgendes aufweist:
eine Lautsprechereinheit (80) und
ein Gehäuse, in dem die Lautsprechereinheit aufgenommen ist und das einen Schallausgabekanalteil beinhaltet, der eine Schallausgabe von der Lautsprechereinheit in einen Fahrzeuginnenraum (300a) einleitet,
wobei der Schallausgabekanalteil im Gebrauch zwischen einem Seitenteil des Ersatzreifens (201) und einem Teil des Gehäuses ausgebildet ist, und
**dadurch gekennzeichnet, dass** der genannte Teil des Gehäuses im Wesentlichen in der gleichen gekrümmten Form wie die des genannten Seitenteils des Ersatzreifens ausgebildet ist.

2. Lautsprechervorrichtung (100) nach Anspruch 1, wobei das Gehäuse ein erstes Gehäuse (50), in dem die Lautsprechereinheit aufgenommen ist, und ein zweites Gehäuse (51), das an dem ersten Gehäuse montiert ist, beinhaltet und die Lautsprechereinheit (80) eine Membran (10) beinhaltet, die den Schall erzeugt,
und wobei das erste Gehäuse (50) eine Öffnung beinhaltet, die den von einer Rückseite der Membran (10) ausgegebenen Schall in den Raum ausgibt.

3. Lautsprechervorrichtung (100) nach Anspruch 2,
wobei das zweite Gehäuse (51) einen ersten Teil (51a), der in einer im Wesentlichen napfförmigen Form ausgebildet ist und in dem die Lautsprechereinheit (80) aufgenommen ist, einen zweiten Teil (51b), der in einer Form mit im Wesentlichen ringförmigem Grundriss ausgebildet ist und sich von einem äußeren peripheren Endteil des ersten Teils nach außen erstreckt, und einen dritten Teil (51 c), der sich von einem äußeren peripheren Endteil des zweiten Teils nach außen erstreckt, beinhaltet und
wobei der Teil des Schallausgabeformteils dem zweiten Teil (51b) entspricht.

## Revendications

1. Dispositif haut-parleur (100) destiné à être monté dans un logement de roue d'un véhicule de telle sorte que, lors de l'utilisation, il se trouve à l'opposé d'une roue de secours (201) montée dans le logement de roue, le dispositif comportant :
une unité de haut-parleur (80) ; et
un logement qui reçoit l'unité de haut-parleur et comprend une pièce de passage de sortie sonore introduisant une sortie sonore en provenance de l'unité de haut-parleur dans un intérieur de véhicule (300a) ;
dans lequel la pièce de passage de sortie sonore est formée entre une partie latérale de la roue de secours (201) et une partie du logement en cours d'utilisation, et
**caractérisé en ce que** ladite partie du logement est façonnée en sensiblement la forme courbe identique à celle de ladite partie latérale de la roue de secours.

2. Dispositif haut-parleur (100) selon la revendication 1, dans lequel le logement comprend un premier logement (50) qui reçoit l'unité de haut-parleur et un second logement (51) qui est monté sur le premier logement, et l'unité de haut-parleur (80) comprend un diaphragme (10) qui génère le son ;
et dans lequel le premier logement (50) comprend une ouverture qui émet le son émis en provenance d'un côté arrière du diaphragme (10) dans l'espace.

3. Dispositif haut-parleur (100) selon la revendication 2 ;
dans lequel le second logement (51) comprend une première pièce (51a) qui est façonnée en une forme sensiblement de coupelle et reçoit l'unité de haut-parleur (80), une seconde pièce (51b) qui est façonnée en une forme plane sensiblement annulaire et qui s'étend vers l'extérieur depuis une partie d'extrémité périphérique extérieure de la première pièce, et une troisième pièce (51c) qui s'étend vers l'extérieur depuis une partie d'extrémité périphérique extérieure de la seconde pièce ; et
dans lequel la partie de la pièce façonnée d'émission de son correspond à la seconde pièce (51b).
